Europäisches Patentamt

European Patent Office

Office européen des brevets

(19)

(11) EP 1 221 666 A1

(12) EUROPEAN PATENT APPLICATION

(43) Date of publication:
10.07.2002 Bulletin 2002/28

(51) Int Cl.⁷: G06F 17/60

(21) Application number: 01300087.2

(22) Date of filing: 05.01.2001

(84) Designated Contracting States:
AT BE CH CY DE DK ES FI FR GB GR IE IT LI LU
MC NL PT SE TR
Designated Extension States:
AL LT LV MK RO SI

(71) Applicant: BRITISH TELECOMMUNICATIONS
public limited company
London EC1A 7AJ (GB)

(72) Inventor: The designation of the inventor has not
yet been filed

(74) Representative: Nash, Roger William et al
BT Group Legal Services,
Intellectual Property Department,
Holborn Centre, 8th Floor,
120 Holborn
London EC1N 2TE (GB)

(54) **Method of evaluating behaviour**

(57) The invention relates to a method of evaluating a measured behaviour against a predicted behaviour, where the measured behaviour is supported by a set of first data and the predicted behaviour is predicted from a set of second data. The evaluation is primarily used to provide an explanation for differences between measured and predicted behaviours. The method comprises the steps of:

i) comparing the measured behaviour with at least one aspect of the predicted behaviour;
ii) if there is a difference between the measured behaviour and said at least one aspect, which difference meets one or more predetermined criteria, using the set of first data together with at least some of the set of second data to generate a further behaviour;
iii) comparing the further behaviour with the measured behaviour; and
iv) if there is a difference between the further behaviour and the measured behaviour, which difference satisfies one or more predetermined criteria, reviewing the set of first data against the set of second data to identify one or more elements of the first data that are relevant to said difference.

Fig 2

EP 1 221 666 A1

EP 1 221 666 A1

**Description**

The present invention relates to a method of evaluating behaviour, and has particular application in evaluating aspects of travelling behaviour between one location and another.

The service industry can broadly be split between services that are provided at a fixed location, and services that are provided at variable locations. The utility industries such as gas, electricity, water and communications industries, together with companies concerned with configuring and fixing appliances, and machines (including vehicles such as trains and aeroplanes) and/or performing repairs and improvements to buildings, largely fall within the fixed location services. That is to say that in the event of a request for service, a service engineer (or equivalent) has to travel to a particular location in order to examine the nature of the request, and perform any necessary actions in respect thereof. This can readily be seen in the case of utility industries: for example domestic boiler faults typically involve examination of boiler equipment; blockages in the water system typically involve examination of local pipe work; and a fault with a telephone line can involve a fault in an exchange or land line local to the faulty line. In each of these scenarios, engineers are required to visit the fault location.

In reality thousands of such faults are reported daily, and the handling, distribution and follow up thereof are managed by complex scheduling systems. Such scheduling systems are typically designed to utilise resources - namely the engineers, vehicles and equipment - effectively and efficiently, and generate a daily schedule for each engineer based on a number of constraints such as skill, location, type of job, priority, etc.

To generate accurate schedules the system must have estimates for travel time between jobs. Current schedules use estimates that are only accurate for around 50% of the time, as the estimates are based on a single value that crudely accounts for a range of travel-related factors. This means that, in response to actual data, the scheduler will have to perform some sort of re-scheduling for at least 50% of the jobs. This is clearly a sub-optimal use of time and resources. The costs associated with travel times are significant so there is motivation to reduce journey times, or at least to have an idea of what a reasonable journey time is (and then can put measures in place to address overly long journeys).

In particular, there is a need to be able to identify journeys that have objectively taken longer than "expected" and to identify a reason for the delay. In general, this sort of analysis is performed using crisp rules - field and operations managers typically use spreadsheet packages such as Excel™ to analyse data, which operate in accordance with crisp rules. However, crisp rules work on discrete numbers, and eliminate cases that cross boundaries of crisp states. Such analysis is counterintuitive, as changes in behaviour are often gradual rather than sharp. Crisp rules are therefore not particularly well suited to analysing journey times.

In the following description, the terms "travel time", "user", and "travel factor" are used and are defined as follows:

"Travel time": includes wrap-up time (time to collect equipment and leave premises at location a), vehicle access time (time to get to vehicle from premises), actual travel time (from location a to location b), parking time (time to find parking space near location b), access time (time from vehicle to premises at location b);

"Travel Factor" (TF): psuedo speed that, when multiplied by straight-line distance between 2 points, results in the actual travel time prediction.

"user": an entity that makes use of services supplied by a service provider. A user may be a human, such as a customer or a manager, or it may be a piece of software that monitors for the occurrence of predetermined events. The service may be, for example, any form of utility service, where receipt of a service is, at least in part, dependent on the operational status of the corresponding utility equipment. Such utility services include communications, gas, electricity, water etc. In particular, when the entity is human, users could be field managers (people who manage technicians and who are interested in visualisation aspects of travel times); operations managers (people who are in charge of monitoring Travel Factors); or resource managers (people who are concerned with allocation of manpower within a domain, specifically to allocate manpower as a function of demand within a domain).

According to a first aspect of the present invention, there is provided a method of evaluating a measured behaviour against a predicted behaviour, where the measured behaviour is supported by a set of first data and the predicted behaviour is predicted from a set of second data. The evaluation is primarily used to provide an explanation for differences between measured and predicted behaviours. The method comprises the steps of:

i) comparing the measured behaviour with at least one aspect of the predicted behaviour;

ii) if there is a difference between the measured behaviour and said at least one aspect, which difference meets one or more predetermined criteria, using the set of first data together with at least some of the set of second data to generate a further behaviour;

iii) comparing the further behaviour with the measured behaviour; and

iv) if there is a difference between the further behaviour and the measured behaviour, which difference satisfies one or more predetermined criteria, reviewing the set of first data against the set of second data to identify one or more elements of the first data that are relevant to said difference.

Thus if there is a difference between the predicted behaviour and the measured behaviour, the set of data characterising the measured data is compared against that used to create the predicted behaviour. If there are differences between these two sets of data then a further prediction is generated, based on the measured data set. If the further prediction is closer to the measured behaviour than the original predicted behaviour was, at least part of the set of data corresponding to the measured behaviour is used to explain the difference.

Preferably the predicted behaviour is generated by a system comprising a plurality of fuzzy logic statements, so that when the system receives said set of data as input, the set of data is input to respective fuzzy logic statements, the system evaluates the fuzzy logic statements, and converts them into a predicted behaviour in accordance with one or more predetermined conversion functions.

Advantageously the behaviour includes journey duration and a set of data includes journey data relating to travel conditions for a journey between a start location and end location, said travel conditions including at least some of road works, weather, time of day, time of year, day of week, road type, road condition, technician driving style, and traffic conditions.

According to a second aspect of the present invention there is provided a method of querying data and receiving an output in response to the query, which data to be queried is stored in a store, the method including the steps of:

inputting a query in the form of one or more fuzzy logic statements;
applying corresponding one or more predetermined functions to convert said one or more fuzzy statements into one or more query conditions;
reviewing the stored data in accordance with the or each query condition so as to identify one or more stored data that satisfy the query and
outputting the identified stored data.

Conveniently the fuzzy logic statements describe any one of punctuality, frequency, and proportion, so that queries of the form "show me the number of people that are late 30% of the time" can be resolved by embodiments of the invention.

Further aspects, features and advantages of the present invention will be apparent from the following description of preferred embodiments of the invention, which refer to the accompanying drawings, in which

Figure 1a is a schematic diagram of a workflow scenario that utilises an embodiment of the invention;
Figure 1b is a schematic diagram of an inter-job journey;
Figure 2 is a schematic block diagram showing an embodiment of apparatus for estimating inter-job travel times;
Figures 3a and 3b in combination comprise a flow diagram showing an embodiment of a process for predicting inter-job travel times;
Figure 4 is a flow diagram of a modelling method forming part of the embodiment of Figures 3a and 3b;
Figure 5 is a schematic diagram of an alternative modelling method forming part of the embodiment of Figures 3a and 3b;
Figure 6 is a flow diagram showing operation of the modelling method of Figure 5;
Figure 7 is a schematic diagram of display means forming part of the apparatus of the embodiment shown in Figure 2;
Figure 8a is a graphical representation of fuzzy conditions describing frequency;
Figure 8b is a graphical representation of fuzzy conditions describing punctuality;
Figure 9 is a flow diagram showing a search and query process forming part of the apparatus of the embodiment shown in Figure 2;
Figure 10a is a flow diagram showing an explanation process forming part of the apparatus of the embodiment shown in Figure 2;
Figure 10b is a schematic diagram showing treatment of data in accordance with the process shown in Figure 10a.

Overview

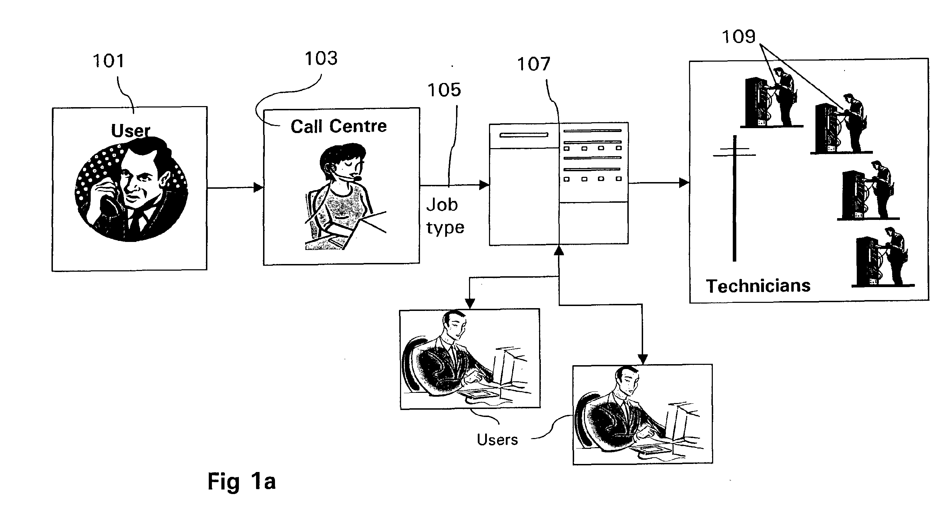

Figure 1a shows the typical processes involved in reporting and fixing faults in communication lines and/or equipment. The process is initiated by a call 101 from a user reporting a fault with their communications equipment - e.g. a loss of dialling tone on their phone line. This call 101 is received by an operator 103 at a call centre, who asks the user a series of questions and attempts to classify the fault into a job type 105. If the fault cannot be fixed online, the operator 103 records the job type, together with various details relating to the user, and this record is sent onto the next stage in the process - to the work manager system 107. Alternatively faults can be reported to the work manager system 107 directly, bypassing the operator 103.

The work manager system 107 receives the job type 105 from the operator 103, and is responsible for scheduling repair of the fault. This involves identifying a technician 109 that is qualified to fix this kind of job, allocating the identified technician 109 to the job 105 and allocating a time to the job.

The identified technician 109 is then notified of the job, together with the location of the fault, and a date and time allocated to the job. Typically, each technician 109 is either informed of his jobs in sequence (i.e. one at a time), or has a daily schedule, which details all of the jobs to be performed in that day. The job type 105 in Figure 1a corresponds to one job in a list of jobs for a single day. Once a technician 109 has completed a job, he receives his next job (or reviews his daily schedule to look up his next job), and travels to the location of the next job. The technician 109 logs both the instance of departure from the last job and arrival at the next job 105, by means of a clocking device, or similar. The technician may also log various travel conditions relating to the journey. In addition, the technician 109 assigns a Clear Code to the job, which defines the exact nature of the fault, once he has completed the job 105.

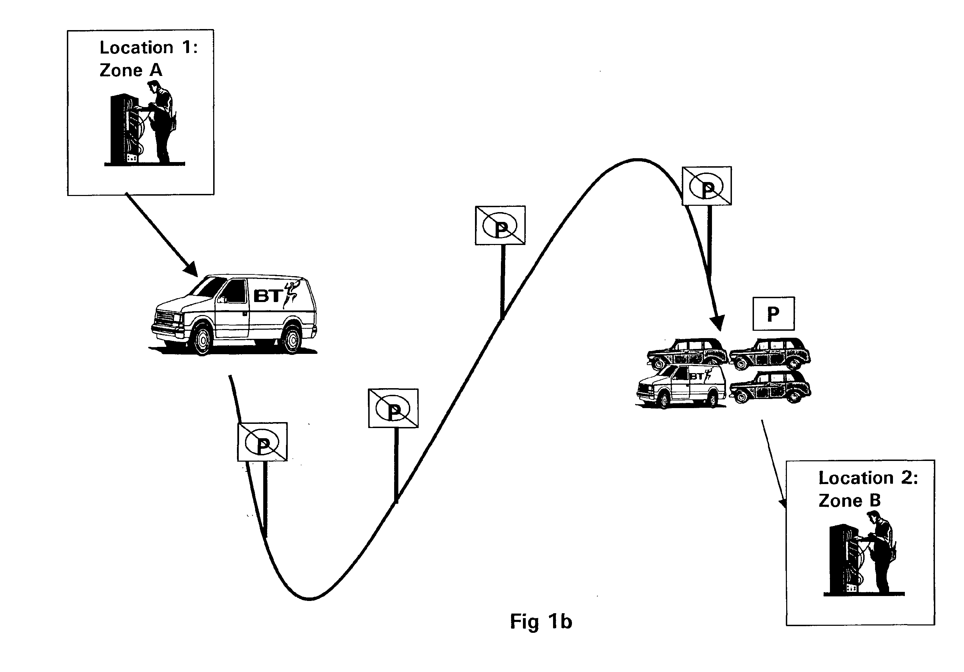

Embodiments of the present invention are concerned with aspects of job scheduling performed by the work manager system 107. The allocation of a time to a job is dependent on a plurality of factors, including the nature of the fault, the skills of available technicians, and the accuracy of the fault diagnosis. Typically a technician 109 is allocated several jobs in a single day, and at least some of these jobs are at different geographical locations, such that the technician 109 is likely to have to travel between job locations, as indicated in Figure 1b. Therefore the scheduling of jobs also has to account for location of the job, the location of the previous job, and the travel time between jobs.

Specifically, embodiments of the invention are concerned with estimating travel time between jobs. Travel time is typically treated as a fixed overhead when scheduling jobs, and is extremely difficult to quantify, because factors such as road conditions, weather, vehicle condition, route disruption, style of driving, traffic conditions etc. all contribute to journey times, making it difficult to prescribe an expected inter-job journey time.

Embodiments of the present invention make use of the realisation that actual journey times implicitly comprise contributions from each of these factors. Thus, provided there is a statistically representative sample of journey times for each inter-job journey, an average journey time *can* be prescribed. Suitable inter-job data can be collected from the logged data times - for each technician 109, and for each job, the logged departure time corresponding to leaving a first job, and logged arrival time corresponding to arriving at a second job, are used to define a journey time between the first and second jobs (where, e.g. first job is within exchange area 1 and second job is within exchange area 2, shown in Figure 1b). This data, together with various travel-related data such as weather, road conditions, road works, traffic density etc, is collected (where available) for all technicians, for all inter-job journeys.

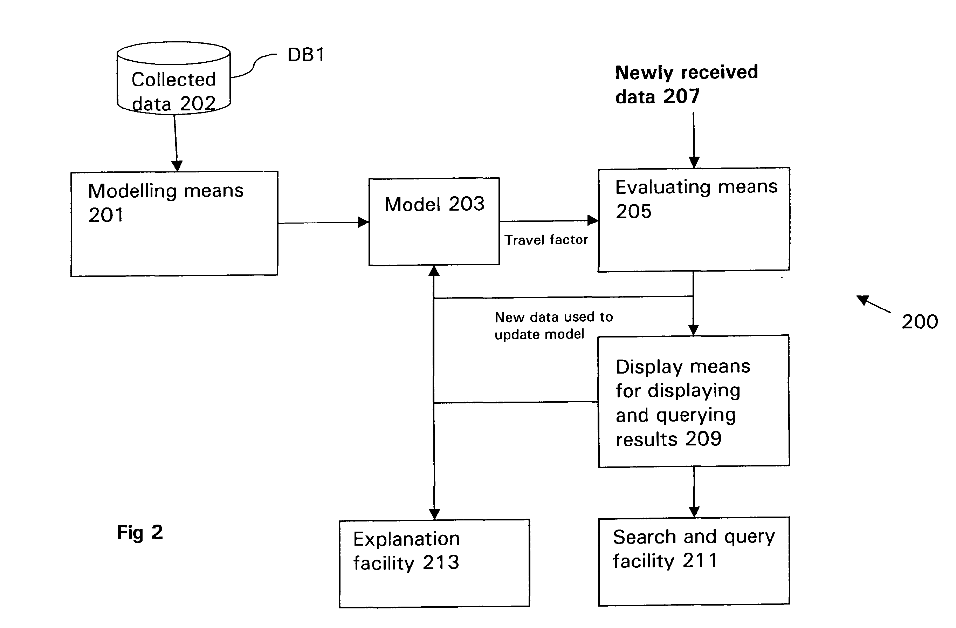

Figure 2 shows an overview of an embodiment of the invention, generally referred to as travel estimator 200. The travel estimator 200 essentially comprises two parts: modelling means 201 for creating a model 203 to predict "travel factors" and evaluating means 205 for evaluating new inter-job data 207 with respect to the travel factors. The model 203 is created using inter-job data that has been recorded by technicians as described above, and collected in a repository 202, and the evaluating means 205 compares new inter-job data 207 with the predicted "travel factors". The evaluating means 205 can be arranged to present the comparison graphically, as is described in more detail below, and, in addition, at least some of the newly received data can be used to update the model 203 at predetermined intervals.

Advantages of embodiments of the invention include having realistic predictions of travel times, because the predictions are based on a model that has been created from real data. Furthermore, using actual data means that there is no need to independently quantify contributions from all possible travelling parameters (e.g. weather, road conditions, road works, traffic density etc.).

Further advantages include being able to mine characteristic journey times from the raw data as a function of time of day, day of week, technician, and view these journey times graphically. Analysing and presenting the data in this way has numerous benefits: consider the situation where faults occur in zone A and zone B every day of a week, and at different times of different days. Technicians are allocated to these faults, travelling between zones A and B at the different times and days, and the inter-job journey data relating to these journeys is compared against the predicted travel factor for that journey. If the comparisons are presented graphically, then the work manager system 107, which allocates times to jobs, can determine an "optimum" travelling time, and/or time periods or days to avoid making the journey from zone A to zone B.

In addition, a graphical representation helps the user (field manager) when explaining the interrelationship between travelling times and scheduling issues to the technicians 109.

Embodiments specific to this invention include a query facility 211 for users, e.g. operators of the work manager system 107, to query the travel estimator 200 with specific travel-related questions. The operator can select a query phrased in natural language, such as "list the technicians that frequently overrun a scheduled inter-job journey time", or "for an inter-job journey between Exchange area 1 and Exchange Area 2, show me the best time to travel" (described in detail below). This removes the need for operators to interpret the data themselves, and represents a significant advantage when there are time pressures, and/or if the data is relatively opaque and would require a statistician or other specialist to interpret the data.

Yet further embodiments specific to this invention include an explanation facility 213 for users, such as field managers, who are operators of the work manager system 107 to request an explanation for aspects of a selected journey - for example querying why a journey took longer than expected. If an explanation can be given, this relieves the user (field manager) of the burden of having to ask the technician 109, and, if the explanation is based on a change to the travelling conditions, it saves the user (field manager) from incorrectly blaming the technician 109.

Model Creation

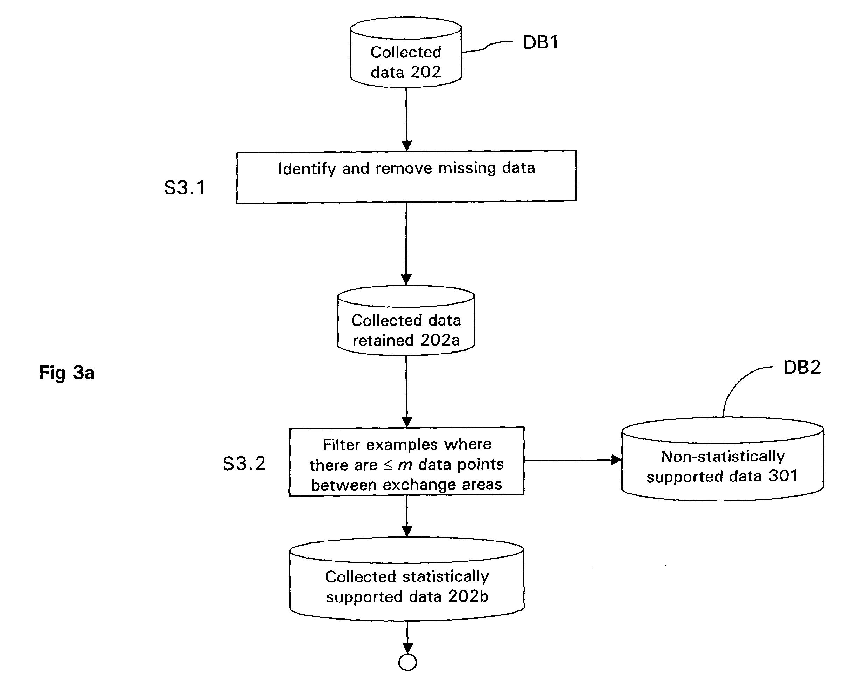

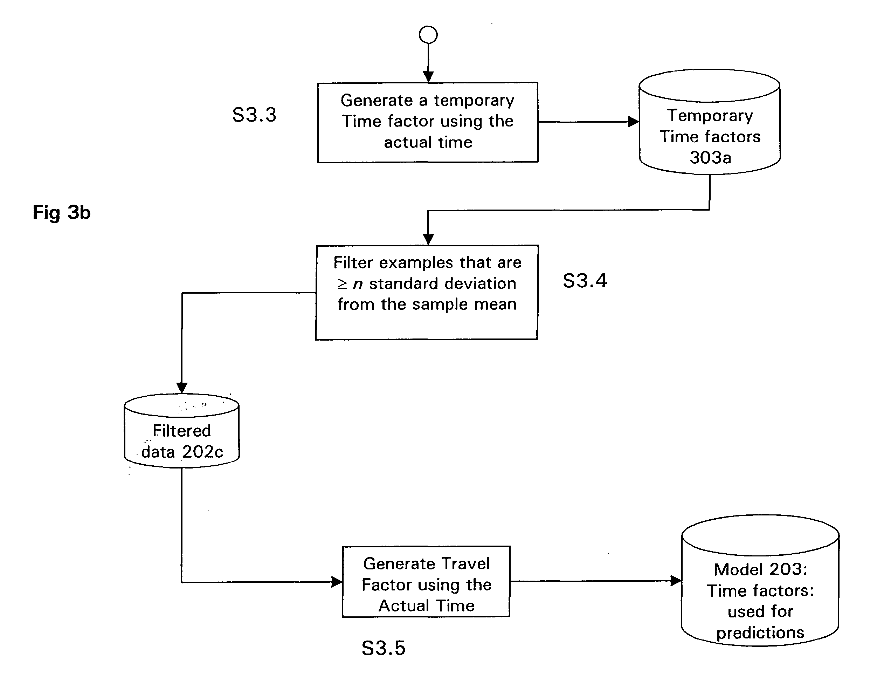

As stated above, the modelling means 201 creates a model 203 using inter-job journey data, and uses the model 203 to predict travel factors. The data, referred to as collected data 202, for each inter-job journey includes time data, weather information, road conditions, roadwork history, etc. each of which can be stored in fields in a database DB1 for each inter-job journey. The time data can be used to determine the difference between the time that a technician 109 records leaving a first job, and the time that he records arriving at the second job. The steps carried out by the modelling means 201 are described with reference to Figure 3:

Step S 3.1 - Identify pairs of inter-job data from the collected data 202, and remove data for which there is a missing pair. This comprises correlating time of departure from the first job with time of arrival at the second job, and can be done by sorting the inter-job data by technician ID.

In one embodiment of the invention, a technician 109 has a hand held terminal (similar to a phone set), which he connects to a box outside the house or the line in an exchange at the location of the job, enabling him to log onto a central system (controlled by the work manager system 107, for example). The technician 109 enters details of the job (job number) and its status (start, end, break). The technician 109 can also enter details relating to his journey - e. g. the road conditions, whether there were any road works en route, and traffic density etc. The system saves and time stamps this information as inter-job journey data. Alternatively, the central system could include means to automatically populate such data from road and weather reports (e.g. available weather and environment conditions available over the Internet and traffic reports from Traffic master™).

Any necessary information about the job is sent to the hand held terminal e.g. fault history. When the technician 109 has finished that job, he logs onto the system again, and the system informs him of the location of the next job. In an alternative embodiment, a technician 109 may have a tracking device, such as a GPS receiver or suitably configured mobile phone, which records the location of the technician and correlates this with the technician's schedule to time stamp job arrival and departure with location.

In some cases the technician 109 may have forgotten to record either the departure time, the arrival time or both times. If either the arrival time or departure time has not been recorded, the corresponding time (that has been recorded) is removed from the collected data 202.

Step S 3.2 - For each possible inter-job journey, calculate the number of collected data corresponding thereto. If there is less than a predetermined number of data, remove all data relating to that inter-job journey, and store it in a repository DB2. The model 203 is built using inter-job data, which means that the data selected to create the model 203, namely inter-job data, must be statistically supported. If there is less than a predetermined number of data for any one of the inter-job journeys, the data relating to this inter-job journey is not used to create the model, but is stored in the repository DB2, for future calculations.

Step S 3.3 - Generate a temporary travel factor for each possible inter-job journey. This comprises firstly calculating a straight-line distance between each of the jobs: the location of each job, and the location of each exchange, is known so that the straight-line distance is determined from standard geometrical relations.

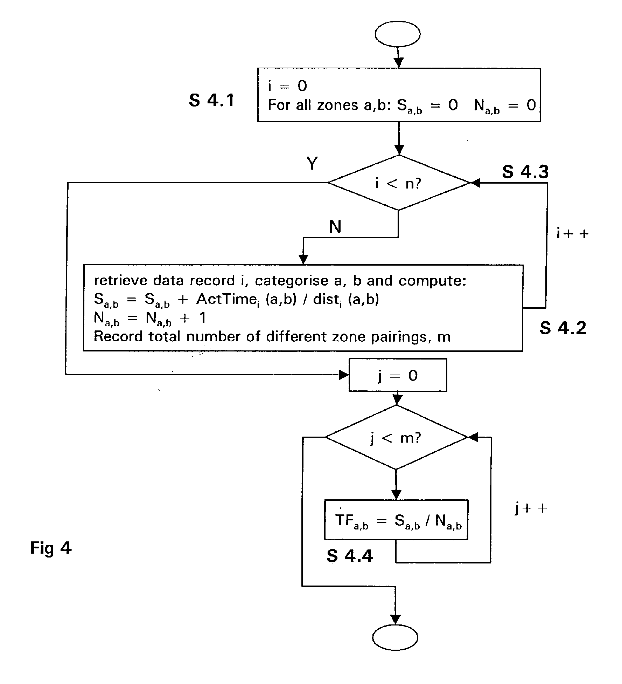

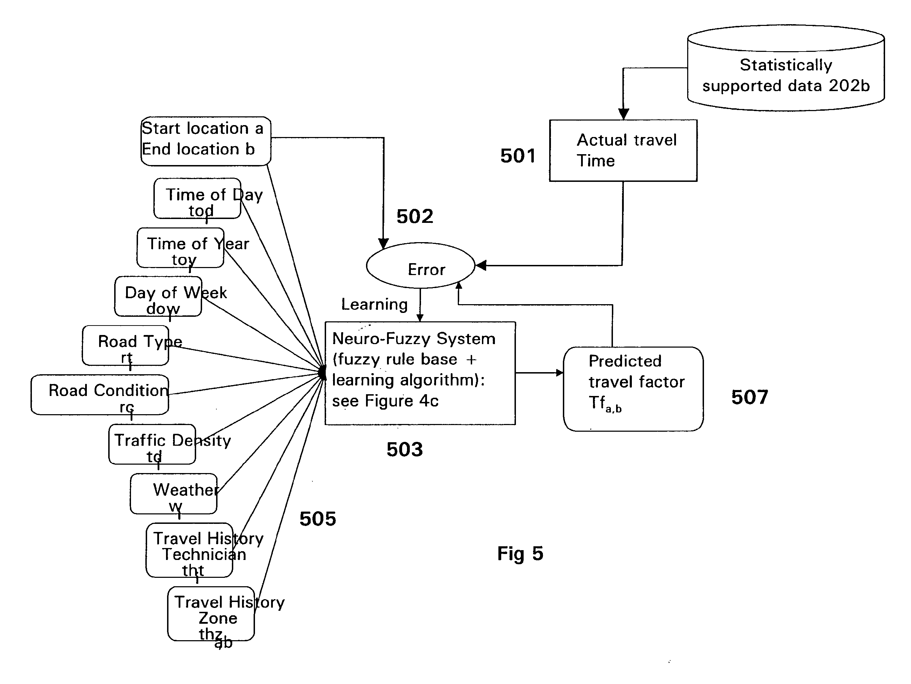

Once the straight-line distance has been computed for each inter-job journey, the distances are input to a method for estimating a travel factor corresponding to that inter-job journey. The method can include one, or a combination, of regression, neuro-fuzzy, fuzzy-clustering, neural network learning methods or standard statistical techniques. Examples of methods of estimating the travel factor using regression and neuro-fuzzy methods are presented in Figures 4 - 6, and are described in detail below.

Step S 3.4 - Filter outlier travel factors. Once a travel factor has been generated for each inter-job journey, average travel factors are calculated, and, for each inter-job journey, travel factors that are outside of a predetermined range (n) are removed from the data (removed data is termed an outlier). This predetermined range could, for example, be 2 standard deviations from the average travel factor. The inter-job time data relating to the outliers is removed from the statistically supported collected data 202b and stored as filtered collected data 202c.

Step S 3.5 - Generate a travel factor based on the filtered collected data 202c. This step is essentially a repeat of step S 3.4, where the travel factor is calculated based on one, or a combination of, learning methods shown in Figure 4. The reason for re-computing the travel factors based on the filtered collected data 202c, rather than accepting the average travel factor determined in step S 3.4, is that the S 3.4 average travel factor comprises the outliers, and is thus skewed by the outliers.

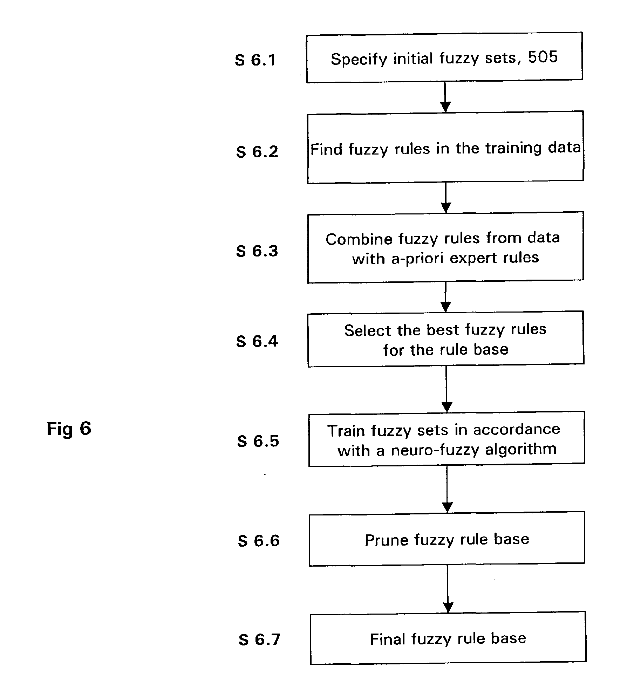

These methods are used by the evaluating means 205 to predict travel times, as described with reference to Figures 4 and 6 below.

Linear regression model 203:

The predicted travel time for journeys between two locations $l_a$ in zone a and $l_b$ in zone b is computed by linear regression in accordance with the following expression:

$$\text{time}(l_a,l_b) = \frac{1}{TF_{a,b}} \cdot \text{dist}(l_a,l_b)$$

The travel factor $TF_{a,b}$ is derived as described in Figure 4a, which makes use of the abbreviations listed in Table 1:

Table 1

| a, b | zones |
|---|---|
| ActTime: | actual travel time |
| ActTime$_i$ (a,b) | actual travel time for travelling between two locations in zones a and b measured for data record i |
| dist$_i$($l_a$,$l_b$) | straight-line distance between two locations in zones a and b measured for data record i |
| $l_a$, $l_b$ | locations in zones a and b |
| n | number of data records (records are numbered from 0 to n-1) |
| m | number of inter-zone pairings |
| $N_{a,b}$ | number of records describing journeys between zones a and b |
| $S_{a,b}$ | sum of travel speeds from all data records describing journeys between two locations in zones a and b |
| TF | travel factor (average speed) |
| $TF_{a,b}$ | travel factor (average speed) for travelling between any two locations in zones a and b |

Step S 4.1 initialization of data: reset the number of records $N_{a,b}$ and sum of travel speeds $S_{a,b}$ corresponding to travel between all first and second zone pairings a and b;

Step S 4.2 retrieve data record i and categorise first and second zone pairings a, b corresponding thereto as $m_{a,b}$. Compute the sum of travel speeds for this pairing $m_{a,b}$, based on straight-line distance between two locations in zones a and b measured for the data record i

$$S_{a,b} = S_{a,b} + \text{ActTime}_i \, (a,b) \, / \, \text{dist}_i \, (a,b)$$

Increment the number of records corresponding to the first and second zone pairings a, b

$$N_{a,b} = N_{a,b} + 1$$

Step S 4.3 If i < total number of records, retrieve the next data record, else goto S 4.4

Step S 4.4 For each of the first and second zone pairings m calculate an average Travel factor:

$$TF_{a,b} = S_{a,b} \, / \, N_{a,b}$$

This average Travel factor is the predicted travel factor for travel between locations in zones a and b.

Neuro-fuzzy learning model 203 ("Fuzzy system")

As stated above, the actual journey times implicitly comprise contributions from a number of variables, such as time of day, time of year, day of week, road type, road condition, technician driving style, traffic conditions etc. In the neuro-fuzzy method presented in Figure 5, the Travel factor is expressed as a plurality of fuzzy sets 505, each of which corresponds to one of these variables. The choice of fuzzy sets that are relevant for each inter-job journey is learnt from the statistically supported data 501. The details of the process for determining the appropriate neuro-fuzzy system 503 is described with reference to Figure 6, which makes use of the abbreviations listed in Table 2:

Table 2

| a, b | zones |
|---|---|
| ActTime: | actual travel time |
| $ActTime_i$ (a,b) | actual travel time for travelling between two locations in zones a and b measured for data record i |
| $dist_i(l_a, l_b)$ | straight-line distance between two locations in zones a and b measured for data record i |
| $dow_i$ | day of week for data record i |
| $l_a, l_b$ | locations in zones a and b |
| n | number of data records (records are numbered from 0 to n-1) |
| $rt_i$ | road type (mainly motorway, mainly good roads, mainly small roads) for data record i |
| $rc_i$ | road condition (normal, minor road works, major road works) for data record i |
| $N_{a,b}$ | number of records describing journeys between zones a and b |
| $S_{a,b}$ | sum of travel speeds from all data records describing journeys between two locations in zones a and b |
| TF | travel factor (average speed) |
| $TF_{a,b}$ | travel factor (average speed) for travelling between any two locations in zones a and b |
| $tht_i$ | travel history of technician (average difference between technician's travel times and predicted travel times over the last 100 journeys of this technician) for data record i |
| $thz_{a,b}$ | travel history for zones (average difference between actual travel times and predicted travel times over the last 100 journeys between zones a and b) |
| $tod_i$ | time of day for data record i |
| $toy_i$ | time of year (day and month) for data record i |
| $w_i$ | weather (normal, heavy rain/storm, ice/snow) for data record i |

The process described in Figure 6 is carried out once for the complete data set of inter-job journeys (i.e. all data relating to all journeys from any zone a to any zone b). Specifically, at step S 6.1 a selection of fuzzy sets 505 is specified, and at step S 6.2 fuzzy rules are formulated by finding combinations of fuzzy sets for antecedents parts of fuzzy rules (where the antedcedent part is given by the < query condition > from: "If < query condition > then < action > ") that are supported by the training data. Corresponding consequent parts of the fuzzy rules (i.e. the <action> part) are created from the actual travel times 501.

A suitable algorithm for detecting suitable combinations of fuzzy sets could be, for example, the NEFPROX fuzzy rule-learning algorithm, which is described in "Neuro-Fuzzy Systems for Function Approximation", appearing in the Journal Fuzzy Sets and Systems, authored by Detlef Nauck and Rudolf Kruse, in vol. 101, pp.261-271, 1999.

At step S 6.3 the formulated fuzzy rules are combined with data from a-priori expert rules, such as "if the roads are small and the day is Monday and the time of day is morning than the average speed is 20 kph", in order to generate a common list of rules. If there are conflicts between expert rules and the rules derived from data, these conflicts will be solved by deleting rules, depending on their performance (i.e. the number of errors they cause). The user can also specify whether he prefers expert rules over rules derived from data or vice versa.

At S 6.4 a selection is made from this list of rules to yield the best results when compared with the real time data 501 (this provides a complete fuzzy system for predicting travel factors). At step S 6.5 a neuro-fuzzy algorithm, the NEFPROX fuzzy set learning algorithm is applied to the selected fuzzy sets in order to fit the initial fuzzy sets to the data 501. The learning process modifies the selected fuzzy sets in such a way that the performance of the fuzzy system (i.e. the number of errors that they cause) is improved.

At step S 6.6 the trained fuzzy system is pruned by applying a pruning algorithm to the fuzzy system. The pruning algorithm tries to improve the performance of the rule base further by selectively deleting rules, variables and fuzzy sets from the fuzzy system. After each pruning step the performance is tested. If it has not increased, the pruning step is undone. Pruning continues, until all rules, variables, and fuzzy sets have been tried to be pruned. The pruning algorithm will result in a fuzzy system with a rule base that is smaller or equal in size, and a better or equal performance, compared to the fuzzy system before pruning. The pruned fuzzy system then becomes the final predictor for the travel factor for all inter-job journeys.

Once a fuzzy system has been determined (output of step S 6.7), a travel factor 507 for journeys between two locations $I_a$ in zone a and $I_b$ in zone b is computed by applying the neuro-fuzzy Model 503 to 10 input variables and dividing the distance between $I_a$ and $I_b$ in accordance with the following expression:

$$\text{time}(I_a, I_b) = \frac{1}{\text{TF}(\text{dist}(I_a, I_b) tod, dow, toy, rt, rc, td, tht, thz, w)} \cdot \text{dist}(I_a, I_b)$$

An advantage of using a neuro-fuzzy system is that the method is relatively transparent, as the selection of rule sets and forms of the rules can be examined. Furthermore it is possible to include exceptions in the rules, and thereby account for cases that are not (statistically) well represented in the collected data 202.

In general the Fuzzy System is only changed (retrained or created again) if its performance has deteriorated (e.g. the conditions for travel time prediction may have changed because a couple of new motorways have been built). In one embodiment, all of the data comprising the fuzzy system is saved to a further repository 206 (not shown), for use by an explanation facility 213, as described in detail below.

## Use of predicted travel factors

The travel factors can be used to evaluate new inter-job journey data 207, as shown in Figure 2. As described above, data collected from the technicians, new inter-job journey data 207, includes a measure of the time taken to travel between a first and a second job, together with information such as the weather, road conditions etc. that is relevant to that journey (as stated above, this information may have been supplied by the technician 109, or may be derivable automatically.) Each instance of new inter-job journey data 207 is processed in accordance with steps S3.1 to S3.3, saved in the repository DB2, and processed by evaluating means 205, which:

- transforms the temporal data into speed by dividing a measure of straight-line distance between the first and second jobs by the time data 207,
- identifies a travel factor corresponding to a journey between these first and second jobs, and
- compares the speed with the identified travel factor.

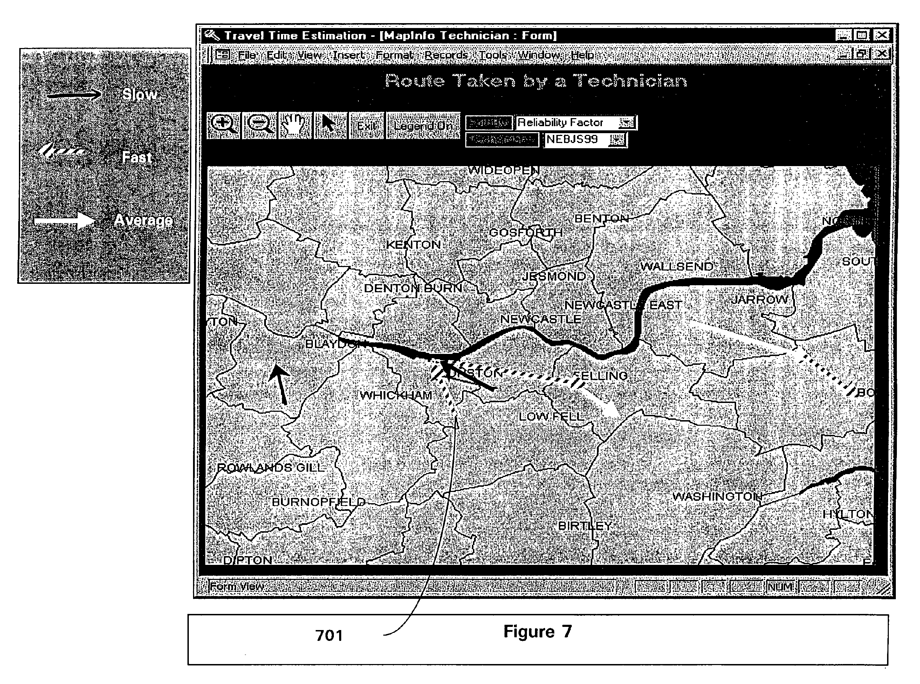

In one embodiment, the comparison is presented graphically by display means 209. Figure 7 shows an output 701 from the display means 209. This output provides a graphical representation of the new data 207 compared with predicted travel factors, comprising arrows that are superimposed on a geographical map to indicate the relative performance of the new data 207. Specifically, the start and head of each arrow represents the start and finish of a journey respectively, and the colour of the arrow indicates whether the measured travel factor corresponding to that journey was slower than, within the range of, or faster than, the predicted travel factor for that journey. A range of different colours can be used, depending on the granularity required of the comparison.

Figure 7 is a comparative measure of travel factors for jobs carried out by a single technician 109. The data can also be presented as a temporal sequence of diagrams for all technicians, each sequence representing a particular time of day and/or day in the week. These sequences can then be evaluated by the user (field manager), enabling him to identify times in the day or days in the week when, for a particular inter-job A, B journey, the travel factor appears to be consistently lower than at other times. If such a time of day or day in the week could be identified, then the jobs A and B could be scheduled at that time to take advantage of the reduced inter-job journey time. In this way, overall journey times could be reduced, thus enabling more jobs to be carried out.

The newly received data that is stored in the repository DB2 can be used to update the model 203. For example, if the linear regression method is used to create the model 203, then as soon as there is a statistically representative volume of data in the repository DB2, this data is processed in accordance with steps S3.4 to S3.6, as shown in Figure 3, effectively generating a new predicted instance of the travel factor. As stated above, if the neuro-fuzzy method is used to generate the model 203, the Fuzzy System is only changed if the performance of the current fuzzy system falls below a predetermined threshold.

As stated above, embodiments specific to this invention provide a search and query facility 211, and this facility is coupled with the graphical display of travel factors. The search and query facility 211 is provided by the display means 209, specifically via menu options available on the displayed data. In one arrangement the user can click on one of the menu options, such as "Search", (not shown), and will be presented with a plurality of possible queries, each of which is in natural language. In another arrangement the user can type in a query, which can be parsed by a suitable parsing means, to extract the content of the query (parsing means are common general knowledge). In either case, the user can select, or request, a query of the following form:

*"Identify all of the technicians who are frequently very late"*

This can be transformed into a fuzzy query, based on the terms *frequently* and *very late.* These terms are used to construct the antecedent of a fuzzy classification rule (recall from above that the antecedent of a fuzzy classification rule comprises If < query condition >. Other examples of suitable terms are shown in Table 1:

Table 3

| Available linguistic terms to construct a fuzzy query | | |
|---|---|---|
| | Frequency | Punctuality |
| Show technicians who are: | almost never 801 rarely 803 sometimes 805 frequently 807 always 809 | on time 811 somewhat late 813 late 815 very late 817 extremely late 819 |

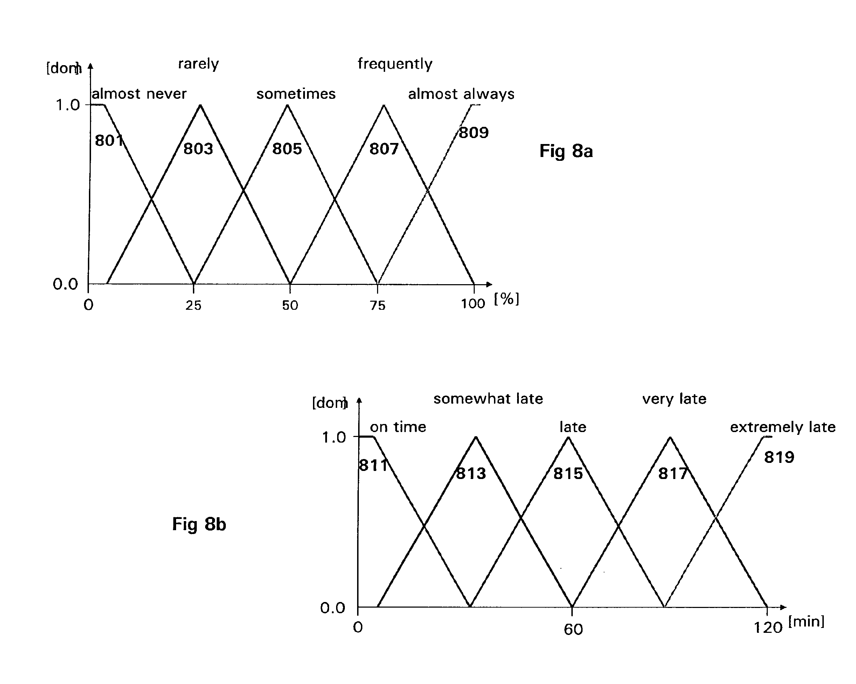

Figures 8a and 8b show examples of fuzzy partitions for describing punctuality and frequency (the entry <don't care> in Table 3 for the variable 'frequency' has the effect of ignoring the value of the variable 'frequency').

The advantages of using fuzzy technology, in particular of abstracting mathematical conditions and expressions from the user, are generally recognised. However, the application of fuzzy technology to explain differences in travel predictions in scheduling systems is new. The advantages of using fuzzy technology for this application are considerable: a typical user of the work manager system 107, such as the field manager, is unlikely to want to be bothered with having to ask specific questions such as "show me which technicians are more than 30 minutes late for more than 70% of the time", and in any event probably does not have the time to work out appropriate expression syntax for a generic query such as "I need to know which of my team are frequently very late". Moreover, phrasing queries using crisp cut-offs, such as 70%, means any technicians that are late 69% of the time would not be included in the search results.

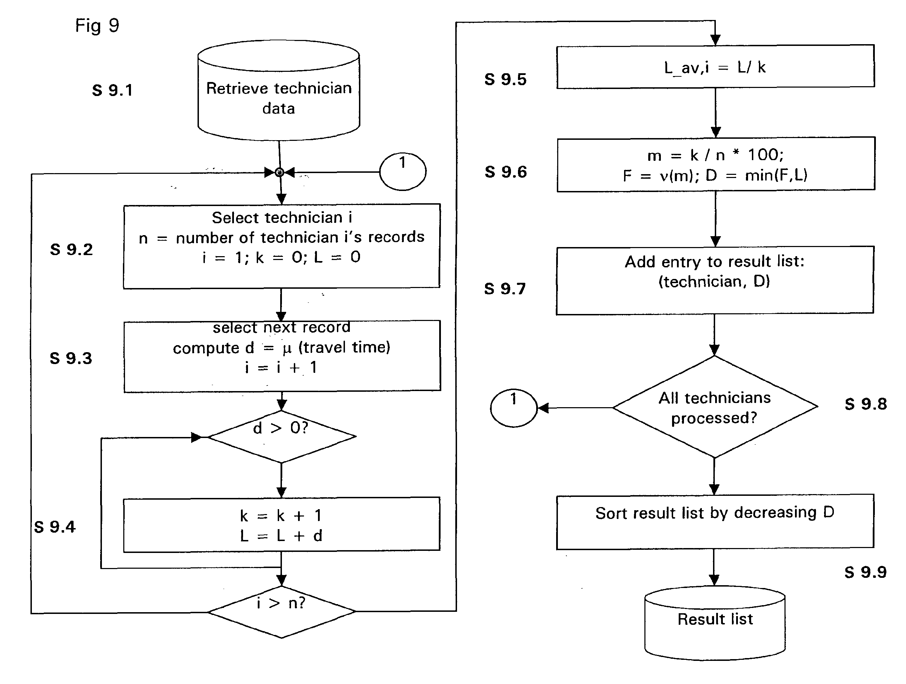

In the present embodiment, the fuzzy query is analysed in respect of the filtered collected data 202c, which, as stated above, is stored in a database. The filtered data 202c can be retrieved from the database by means of standard database queries, constructed, for example, using the SQL querying language. In order to execute fuzzy queries of the form given above, the fuzzy queries are first transformed into, for example, an SQL query (the type of query is dependent on type of database being queried). An example of the retrieval process is shown in Figure 9:

At Step S9.1 all of the records corresponding to the travel times of all technicians are retrieved. At step S9.2 a subset of the data retrieved at S9.1 is created, the subset comprising travel records for an individual technician i. The records are first analysed to determine a punctuality value for the technician i. Thus at step S9.3, each record j of the subset is examined to see whether the field value corresponding to punctuality is greater than zero (i.e. compute $d = \mu$(travel time), which is equivalent to analyzing the field value with respect to Figure 8b). If the field value is greater than zero, then at step S9.4 the field value is stored (e.g. in variable L). This is repeated for all records for technician i, adding to variable L each time a field value is greater than zero. A record of the number of field values contributing to L is maintained in counter k. At step S9.5 an average punctuality value is created: $L\_av, i = L/k$.

At step S9.6 the proportion of technician's records that have non-zero field values is converted into a percentage and evaluated against the frequency condition fuzzy set, e.g. comparing the converted percentage with the fuzzy sets shown in Figure 8a. (The comparison comprises calculating a degree of membership F_i with the frequency fuzzy set (frequency fuzzy sets given in Figure 8a)). Also at step S9.6, the overall fulfillment of technician i with the fuzzy query, *frequently very late,* is evaluated by computing the minimum of F_i and L_av_i. The data relating to technician i is written to a result list at step S9.7.

A different subset of technician records is then retrieved, corresponding to technician i + 1, and steps S9.2 - S9.7 are repeated. This process is repeated for all technician subsets, as indicated in Figure 9 at S9.8. When all technicians have been evaluated, the results can be sorted in decreasing order, step S9.9.

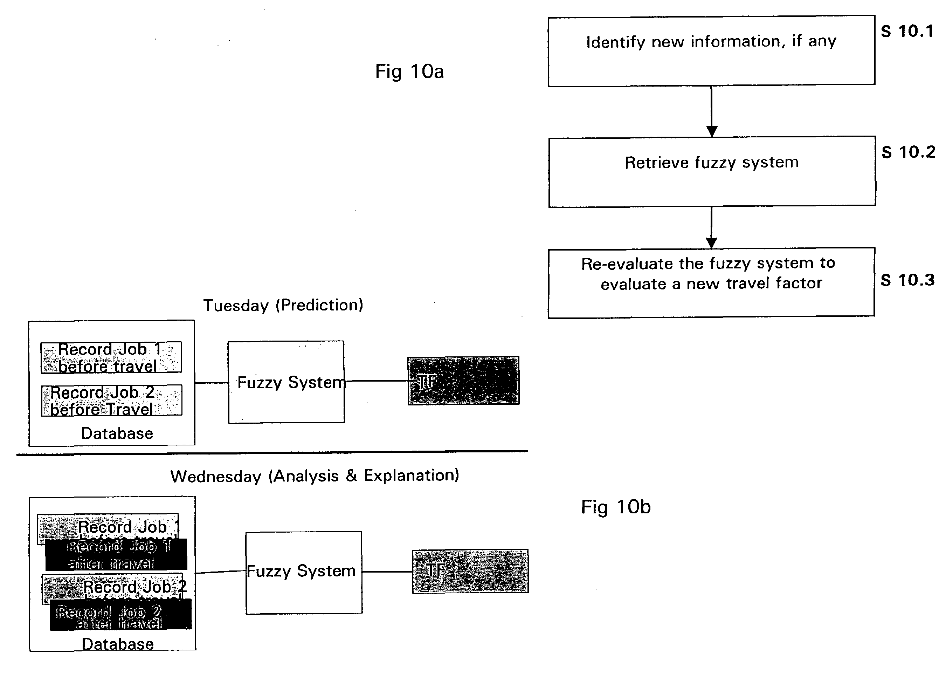

Embodiments of the invention further include an explanation facility 213 for explaining travel time delays and the like. For a selected inter-job journey, typically where a journey has taken significantly longer than expected, the explanation facility 213 inspects the inter-journey data in respect of the selected journey in order to identify whether any new data has been received. If the explanation facility 213 identifies new data, it re-evaluates the fuzzy system, using the new data. This process is illustrated in Figure 10a:

- Step S10.1 identify whether or not any new information has been collected since the fuzzy system was created e. g. new data 207 corresponding to the selected journey is different to the data used to create the model 203 (e.g. in the database fields);
- Step S10.2 In the event of identifying new information, retrieve the fuzzy system (parameters that have been saved to the further repository 206); and
- Step S10.3 re-evaluate the fuzzy system (steps S6.1 - S6.7), and evaluate a new predicted travel factor. If the new predicted travel factor corresponds to the selected inter-job journey, the identified new information explains, at least in part, the unexpectedly long travel time.

The explanation facility 213 thus makes use of the fuzzy system described above with reference to Figure 6, which can use up to 10 or more input variables, each of which (Table 2) represents a parameter that affects travel times (e.g. weather, road conditions, traffic density etc.). The fuzzy system can be used to predict travel time for actual instances of the variables, and this feature is exploited by the explanation facility 213, as illustrated in the example shown in Figure 10b:

Consider the scenario of a technician 109 attending to a fault on a Tuesday in zone A. As described above, he will log both the start time of his journey from, say, zone B, and his arrival time at zone A. There was a new set of road works between zones A and B, and it was raining hard, so when he arrives at zone A he enters these additional details into the central system (note that this information can be entered at any time).

As described above, the model 203 is used to predict travel factors, and is built using previously collected information (e.g. last month's data). If, in the collected data for journeys between zones A and B, there have not been any road works, the travel factor that is predicted will most likely be lower than the actual time recorded by the technician for the Tuesday journey (because the input variables will not include contributions relating to road works). Table 4 shows an example of a record comprising inter-job journey data for inter-job journey between zones A and B before and after Tuesday.

Table 4:

| Field names | Data used in prediction for Tuesday BEFORE journey | Data used in prediction for Tuesday after journey details known |
|---|---|---|
| StartZone | *B* | *B* |
| EndZone | *A* | *A* |
| Distance | 20 | 20 |
| Time of Day | 09:00 | 10:00 |
| Time of Year | April | April |
| Day of Week | Tue | Tue |
| Road Type | motorway | motorway |
| Road Condition | <missing> | major roadworks |
| Traffic Density | <missing> | high |
| Weather | <missing> | heavy rain |
| Travel History Techn. | mostly on time | mostly on time |
| Travel History Zone | mostly on time | mostly on time |

In response to a query (described below), say from a user such as a field manager, the explanation facility 213 reviews data stored with respect to journey from zone A to zone B, to identify whether there is a difference between inter-job journey data corresponding to a journey between zones A and B (step S10.2 - in this example, comparing the rows in Table 4). As there is a difference, the explanation facility 213 re-runs the fuzzy system for an inter-job journey between zones A and B (step S10.3), this time inputting the data recorded by the technician for the Tuesday journey in as variables to the fuzzy system (RH col of Table 4). If the new predicted travel factor is closer to the actual inter-job speed (recall that inter-job times are transformed into speeds by the evaluating means 205), then the additional data is used to formulate a reason for the technician's apparent delay. This is then translated into a fuzzy statement and presented to the field manager:

e.g.

**"The technician was late, because it was raining heavily and there were new roadworks and traffic density was high",** where "raining heavily" and "new road works" can be identified from the database record.

If, however, the new travel factor is not sufficiently similar (sufficiently similar can be defined within correlation limits, for example) to the actual travel speed, the explanation facility 213 cannot explain the lateness, in which case the user could be presented with the following:

**"The system has obtained new information about this journey:**

**It was raining heavily, there were roadworks and traffic density was high**
**However, this new information does not explain why the technician was late"**

There can therefore be three possible outputs from the explanation facility 213:

1) The Fuzzy System can explain the deviation from the predicted travel factor due to new information (S10.1 - S10.3 satisfied);
2) The Fuzzy System cannot explain the deviation because there is no new information (out at S10.1);
3) There is new information, (so S10.1 - S10.3 satisfied), but the Fuzzy System cannot explain the deviation, because the new information does not result in a new prediction of travel factor that is sufficiently similar to the actual travel time.

The latter case could indicate that the "current" fuzzy system needs to be retrained, using the most recently collected data.

In one embodiment this facility 213 is accessed via the graphical display of travel factors. As for the search and query facility described above, the explanation facility 213 is accessed via the display means 209, specifically via menu options available on the displayed data. Thus the user can query a particular inter-job journey by clicking on an arrow (referring back to Figure 7, arrow 701) relating to the journey of interest, and then selecting a menu option "Explain inter-job journey"

Additional details and modifications:

The explanation facility 213 makes use of a fuzzy system as described with reference to Figure 6, and is independent of choice of modelling means. Thus in some embodiments, the model 203 used for predicting travel factors can be the regression system (Figure 4), and in other embodiments the model 203 can be the fuzzy system. In either embodiment, the fuzzy system will be used by the explanation facility 213.

Travel factor predictions could be created for each inter-job journey, and appended to the job details provided to the technician. When a technician 109 receives details of a job one at a time, a "recommended" travel time to the next job could be sent to him along with the location and fault details of the next job. When a technician 109 receives details of a job in a daily schedule, the schedule could include a "recommended" travel time between jobs on the schedule.

As will be understood by those skilled in the art, the invention described above may be embodied in one or more computer programs. These programs can be contained on various transmission and/or storage mediums such as a floppy disc, CD-ROM, or magnetic tape so that the programs can be loaded onto one or more general purpose computers or could be downloaded over a computer network using a suitable transmission medium. Embodiments of the present invention are conveniently written using Visual Basic and the Java™ programming language, but it is understood that these are inessential to the invention.

The repository DB1 is initially populated using FTP running on Unix servers and the data in the repositories is then stored using Microsoft" Access" running on a Windows" NT™ Server. The manipulation of data described above is performed using Visual Basic" running inside Microsoft" Access" and Java™ code running on a Web server. The filtered collected data is preferably accessed - for retrieving and analyzing inter-job data in the manner described above - using the SQL programming language. For more information on SQL see "SQL - The Standard Handbook" Stephen Cannan and Gerard Otten, McGraw-Hill. The functionality of the display means 209, the query and search facility 211 and the explanation facility 213, is provided by Java™ code running within Internet browsers and Java virtual machines, which are installed on client machines.

**Claims**

1. A method of evaluating a measured behaviour against a predicted behaviour, the measured behaviour being supported by a set of first data and the predicted behaviour being predicted from a set of second data, the method comprising the steps of:

i) comparing the measured behaviour with at least one aspect of the predicted behaviour;

ii) if there is a difference between the measured behaviour and said at least one aspect, which difference meets one or more predetermined criteria, using the set of first data together with at least some of the set of second data to generate a further behaviour;

iii) comparing the further behaviour with the measured behaviour; and

iv) if there is a difference between the further behaviour and the measured behaviour, which difference satisfies one or more predetermined criteria, reviewing the set of first data against the set of second data to identify one or more elements of the first data that are relevant to said difference.

2. A method according to claim 1, wherein the predetermined criteria used at step (iv) comprises evaluating whether the difference between the difference generated at step (iv) and the difference between the measured behaviour and the predicted behaviour is smaller than a predetermined threshold value.

3. A method according to claim 1 or claim 2, wherein the predicted behaviour is generated by a system comprising a plurality of fuzzy logic statements, so that when the system receives said set of data as input, the set of data is input to respective fuzzy logic statements, the system evaluates the fuzzy logic statements, and converts them into a predicted behaviour in accordance with one or more predetermined conversion functions.

4. A method according to any one of the preceding claims, wherein the behaviour includes journey duration.

5. A method according to claim 4, wherein a set of data includes journey data relating to travel conditions for a journey between a start location and end location, said travel conditions including at least some of road works, weather, time of day, time of year, day of week, road type, road condition, technician driving style, and traffic conditions.

6. A method according to claim 5, wherein at least some of the travel conditions are expressed in fuzzy logic statements.

7. A method according to claim 6, wherein the system is operable to incorporate said travel condition fuzzy logic statements into the fuzzy logic statements comprising the system, and to process said system so as to generate said predicted behaviour.

8. A method of querying data and receiving an output in response to the query, which data to be queried is stored in a store, the method including the steps of:

inputting a query in the form of one or more fuzzy logic statements; applying corresponding one or more predetermined functions to convert said one or more fuzzy statements into one or more query conditions; reviewing the stored data in accordance with the or each query condition so as to identify one or more stored data that satisfy the query and outputting the identified stored data.

9. A method according to claim 8, wherein the stored data comprises a plurality of journey durations corresponding to journeys between start locations and end locations.

10. A method according to claim 9, wherein each journey duration is accompanied by a corresponding start location and end location and an identification of the entity that completed the journey.

11. A method according to any one of claims 8 to 10, wherein the fuzzy logic statements describe punctuality.

12. A method according to any one of claims 8 to 11, wherein the fuzzy logic statements describe frequency.

13. A method according to any one of the claims 8 to 12, wherein the fuzzy logic statements describe a proportion.

14. A method according to any one of the claims 8 to 13, wherein the reviewing step includes

identifying entities for which there is one or more stored journey duration; organising stored data as a function of identified entity; and for each identified entity, reviewing the stored data for the identified entity in accordance with the or each query condition so as to identify one or more stored data that satisfy the query.

**15.** A method according to claim 14, further including the step of quantifying how the one or more stored data satisfy the query and expressing it as a query satisfaction value.

**16.** A method according to claim 15, further including the step of organising identified stored data as a function of query satisfaction value, such that the output of identified data is organised in accordance with query satisfaction value.

101 User

103 Call Centre

105 Job type

107

109 Technicians

Users

Fig 1a

EP 1 221 666 A1

Fig 1b

DB1

Collected data 202

Newly received data 207

Modelling means 201

Model 203

Travel factor

Evaluating means 205

New data used to update model

Display means for displaying and querying results 209

Explanation facility 213

Search and query facility 211

Fig 2

200

EP 1 221 666 A1

DB1

Collected data 202

S3.1 Identify and remove missing data

Collected data retained 202a

S3.2 Filter examples where there are $\leq m$ data points between exchange areas

DB2

Non-statistically supported data 301

Collected statistically supported data 202b

Fig 3a

**Fig 3b**

S3.3 — Generate a temporary Time factor using the actual time → Temporary Time factors 303a

S3.4 — Filter examples that are $\geq n$ standard deviation from the sample mean → Filtered data 202c

S3.5 — Generate Travel Factor using the Actual Time → Model 203: Time factors: used for predictions

EP 1 221 666 A1

**S 4.1**

i = 0
For all zones a,b: $S_{a,b} = 0$    $N_{a,b} = 0$

Y

i < n?    **S 4.3**

N

i++

retrieve data record i, categorise a, b and compute:
$S_{a,b} = S_{a,b} + ActTime_i\,(a,b)\ /\ dist_i\,(a,b)$
$N_{a,b} = N_{a,b} + 1$
Record total number of different zone pairings, m

**S 4.2**

j = 0

j < m?

$TF_{a,b} = S_{a,b}\ /\ N_{a,b}$

j++

**S 4.4**

**Fig 4**

Statistically supported data 202b

Start location a
End location b

Time of Day
tod

Time of Year
toy

Day of Week
dow

Road Type
rt

Road Condition
rc

Traffic Density
td

Weather
w

Travel History
Technician
tht

Travel History
Zone
thz_{ab}

501  Actual travel Time

502

Error

Learning

Neuro-Fuzzy System
(fuzzy rule base +
learning algorithm):
see Figure 4c

503

Predicted
travel factor
$Tf_{a,b}$

507

505

Fig 5

EP 1 221 666 A1

EP 1 221 666 A1

**Fig 6**

S 6.1 | Specify initial fuzzy sets, 505

S 6.2 | Find fuzzy rules in the training data

S 6.3 | Combine fuzzy rules from data with a-priori expert rules

S 6.4 | Select the best fuzzy rules for the rule base

S 6.5 | Train fuzzy sets in accordance with a neuro-fuzzy algorithm

S 6.6 | Prune fuzzy rule base

S 6.7 | Final fuzzy rule base

Figure 7

701

EP 1 221 666 A1

Fig 8a

Fig 8b

23

**Fig 9**

S 9.1 — Retrieve technician data

①

S 9.2
```
Select technician i
n = number of technician i's records
i = 1; k = 0; L = 0
```

S 9.3
```
select next record
compute d = μ (travel time)
i = i + 1
```

d > 0?

S 9.4
```
k = k + 1
L = L + d
```

i > n?

S 9.5 — $L\_av,i = L / k$

S 9.6
$$m = k / n * 100;$$
$$F = \nu(m); \quad D = \min(F,L)$$

S 9.7 — Add entry to result list: (technician, D)

S 9.8 — All technicians processed?

①

Sort result list by decreasing D

S 9.9 — Result list

EP 1 221 666 A1

## Fig 10a

| Identify new information, if any | S 10.1 |

↓

| Retrieve fuzzy system | S 10.2 |

↓

| Re-evaluate the fuzzy system to evaluate a new travel factor | S 10.3 |

**Tuesday (Prediction)**

Record Job 1 before travel
Record Job 2 before Travel
Database — Fuzzy System — TF

Wednesday (Analysis & Explanation)

Record Job 1
Record Job 1 after travel
Record Job 2
Record Job 2 after travel
Database — Fuzzy System — TF

## Fig 10b

EP 1 221 666 A1

EP 1 221 666 A1

| | European Patent | **DECLARATION** | **Application Number** |
| | Office | which under Rule 45 of the European Patent Convention shall be considered, for the purposes of subsequent proceedings, as the European search report | EP 01 30 0087 |

| The Search Division considers that the present application, does not comply with the provisions of the EPC to such an extent that it is not possible to carry out a meaningful search into the state of the art on the basis of all claims<br><br>Reason: | **CLASSIFICATION OF THE APPLICATION (Int.Cl.7)**<br><br>G06F17/60 |
|---|---|

The subject-matter claimed in claims 1-16 falls under the provisions of Article 52(2) and (3) EPC, such subject-matter relating to a scientific theory. With reference to the Guidelines, B-VIII, points 1-6, the Search Division considers that searching such features would serve no useful purpose. This applies to the remaining commonplace technological features of these claims as well.

The applicant's attention is drawn to the fact that a search may be carried out during examination following a declaration of no search under Rule 45 EPC, should the problems which led to the declaration being issued be overcome (see EPC Guideline C-VI, 8.5).

---
-----

| Place of search | Date | Examiner |
|---|---|---|
| THE HAGUE | 20 September 2001 | Suendermann, R |